(19) Europäisches Patentamt
European Patent Office
Office européen des brevets

(11) **EP 0 848 197 B1**

(12) **EUROPÄISCHE PATENTSCHRIFT**

(45) Veröffentlichungstag und Bekanntmachung des Hinweises auf die Patenterteilung:
**26.02.2003 Patentblatt 2003/09**

(51) Int Cl.⁷: **F16K 17/16**, F16K 31/00

(21) Anmeldenummer: **97121406.9**

(22) Anmeldetag: **05.12.1997**

(54) **Auslöseventil, insbesondere für den Hochdruckbereich**

Trigger valve, in particular for high pressure area

Soupape de déclenchement en particulier pour région de haute pression

(84) Benannte Vertragsstaaten:
**DE ES FR GB IT**

(30) Priorität: **11.12.1996 LU 88850**

(43) Veröffentlichungstag der Anmeldung:
**17.06.1998 Patentblatt 1998/25**

(73) Patentinhaber: **Ceodeux-Fire Extinguisher Valves Technology S.A.**
**7505 Lintgen (LU)**

(72) Erfinder: **Gabriel, Karl**
**7343 Steinsel (LU)**

(74) Vertreter: **Schmitt, Armand et al**
**Office Ernest T. Freylinger S.A.**
**234, route d'Arlon,**
**B.P. 48**
**8001 Strassen (LU)**

(56) Entgegenhaltungen:
**FR-A- 1 409 971**        **GB-A- 693 636**
**US-A- 3 448 750**

**Beschreibung**

Die vorliegende Erfindung betrifft ein Auslöseventil, insbesondere für den Hochdruckbereich.

Hochdruck-Auslöseventile werden zum Beispiel in Feuerlöschvorrichtungen mit gasförmigen Löschmedien, wie zum Beispiel Stickstoff oder Kohlendioxid, die unter hohem Druck in einem Druckbehälter aufbewahrt werden, eingesetzt. Bis zum Auslösen der Feuerlöschvorrichtung verschließen sie den Druckbehälter druckdicht. Beim Auslösen der Feuerlöschvorrichtung, wird im Ventilkörper ein Durchgangskanal für das Löschmedium freigegeben, so daß das Löschmedium aus dem Druckbehälter strömen kann.

Bekannte Hochdruck-Auslöseventile sind als Sitzventile mit einem beweglichen Schließorgan ausgeführt. Bei diesen Sitzventilen muß gewährleistet sein, daß einerseits das Schließorgan bis zum Auslösen den Ventilsitz, trotz großem Druck im Druckbehälter, sicher und druckdicht verschließt, und andererseits das Schließorgan beim Auslösen zuverlässig vom Ventilsitz abhebt und letzteren bis zur völligen Entleerung des Druckbehälters freigibt. Die bekannten Hochdruck-Auslöseventile sind relativ kompliziert im Aufbau und teuer in der Herstellung.

Aus der US 3,448,750 ist ein ansteuerbares Sicherheitsventil größerer Nennweite bekannt. Es umfasst zwei durch einen Zwischenraum getrennte Berstscheiben. Über eine Leitung und ein Füllventil steht dieser Zwischenraum mit einer Druckquelle in Verbindung, welche ihn mit einem Gegendruck beaufschlagt der kleiner als der Systemdruck ist. Ein ansteuerbares Entlüftungsventil ermöglicht es den Zwischenraum über zur Atmosphäre hin zu entlüften. Die beiden Berstscheiben sind hierbei derart ausgelegt, dass bei einem Abbau des Gegendrucks die erste Berstscheibe und danach die zweite Berstscheibe platzt. Das Sicherheitsventil wird an das zu schützende System angeschlossen solange letzteres noch drucklos ist. Bei Druckbeaufschlagung des Systems wird über das Füllventil der Gegendruck zwischen den beiden Berstscheiben proportional zum Systemdruck aufgebaut, bis der maximale Systemdruck erreicht ist. Da das Entlüftungsventil jedoch nicht hundertprozentig leckagefrei ist, nimmt der Gegendruck zwischen den beiden Berstscheiben mit der Zeit jedoch wiederum ab. Folglich muss das Füllventil von Zeit zu Zeit öffnen um den Gegendruck wieder auf seinen Sollwert einzustellen. Erfolgt eine solche Nachregelung des Gegendrucks nicht, kann es zur unerwünschten Auslösung der Vorrichtung kommen. Ein solches Ventil eignet sich sicherlich nicht als billiges und einfaches Hochdruck-Auslöseventil, z.B. für den Einsatz in Feuerlöschvorrichtungen mit gasförmigen Löschmedien.

Der vorliegenden Erfindung liegt die Aufgabe zugrunde, ein zuverlässiges Auslöseventil zu schaffen, das sich durch einen unkomplizierten Aufbau auszeichnet und zudem einfach und billig herzustellen ist.

Diese Aufgabe wird durch ein Auslöseventil nach Anspruch 1 gelöst.

Das erfindungsgemäße Auslöseventil für einen Druckbehälter, der ein erstes Druckmedium enthält, weist einen Ventilkörper auf, in dem ein Durchgangskanal mit einer Eintrittsöffnung und einer Austrittsöffnung für das erste Druckmedium angeordnet ist. Die Eintrittsöffnung dieses Durchgangskanals wird durch eine erste Berstscheibe und seine Austrittsöffnung durch eine zweite Berstscheibe druckdicht verschlossen. Das Ventil wird hierbei derart am Druckbehälter angeordnet, daß die erste Berstscheibe unmittelbar mit dem Druck im Druckbehälter beaufschlagbar ist. Durch die beiden Berstscheiben wird im Durchgangskanal eine Druckkammer druckdicht abgetrennt. Letztere ist mit einem zweiten Druckmedium gefüllt. Dieses zweite Druckmedium, vorzugsweise eine Flüssigkeit, steht im Ventilkörper unter einem Gegendruck der kleiner als der Druck im Druckbehälter ist. Druckentlastungsmittel stehen mit dieser Druckkammer in fluidischer Verbindung und sind für einen progressiven Abbau des Gegendrucks in der Druckkammer ausgelegt. Sie weisen einen Entlastungskanal auf, der durch eine Durchstoßmembrane druckdicht verschlossen ist. Eine Auslösevorrichtung wird durch eine einfache Durchstoßvorrichtung ausgebildet, die der Durchstoßmembrane zugeordnet ist. Diese Auslösevorrichtung ist derart gestaltet, daß sie im Auslösefall die Druckentlastungsmittel für einen progressiven Abbau des Gegendrucks in der Druckkammer freigibt. Mit fallendem Gegendruck steigt der Differenzdruck dem die erste Berstscheibe ausgesetzt ist. Erreicht dieser Differenzdruck den Berstdruck der ersten Berstscheibe, so platzt dieselbe. Das erste Druckmedium kann nun aus dem Druckbehälter über die geplatzte Berstscheibe in die Druckkammer übertreten, so daß der Druck in der Druckkammer wieder ansteigt. Erreicht der Druck in der Druckkammer den Berstdruck der zweiten Berstscheibe (der größer als der ursprüngliche Gegendruck in der Druckkammer, jedoch kleiner als der. Druck im Druckbehälter gewählt ist), so platzt die zweite Berstscheibe. Der Inhalt des Druckbehälters kann nun durch den nun offenen Durchgangskanal des Ventils strömen und über die Austrittsöffnung aus dem Ventil austreten. Das erfindungsgemäße Auslöseventil umfaßt folglich als Verschlußelement lediglich zwei Berstscheiben, die in einen unkomplizierten Ventitkörper eingebaut werden können. Es ist somit wesentlich einfacher und billiger herzustellen als ein Sitzventil.

Schwankt der Druck des ersten Druckmediums im Druckbehälter zwischen einem maximalen und einem minimalen Wert, so ist das Ventil zum Beispiel wie folgt auszulegen:

1) der Gegendruck in der Druckkammer, der Berstdruck der ersten Berstscheibe und der Berstdruck der zweiten Berstscheibe sind derart gewählt, daß die Berstscheiben den Gegendruck in der Druckkammer, sowohl bei atmosphärischem Druck im Druckbehälter, als auch bei maximalem Innendruck im Druckbehälter aushalten;

2) der Berstdruck der ersten Berstscheibe ist derart gewählt, daß sie im Auslösefall platzt, sobald die Differenz zwischen minimalem Innendruck im Druckbehälter und Gegendruck in der Druckkammer, durch den progressiven Abbau des Gegendrucks, einen bestimmten Wert überschreitet,

3) die Druckentlastungsmittel sind derart ausgelegt, daß nach dem Platzen der ersten Berstscheibe, der Druck in der Druckkammer durch Überströmen des Druckmediums in die Druckkammer wieder über den Wert des ursprünglichen Gegendrucks in der Druckkammer ansteigt, und

4) der Berstdruck der zweiten Berstscheibe ist derart gewählt, daß sie platzt sobald der Druck in der Druckkammer nach dem Platzen der ersten Berstscheibe einen bestimmten Grenzwert, der größer als der maximale Gegendruck in der Druckkammer vor dem Auslösen der Auslösevorrichtung, jedoch kleiner als der minimale Druck im Druckbehälter ist, überschreitet.

Das Ventil umfaßt vorteilhaft einen Druckregler der den Druck in der Druckkammer, zum Beispiel auf einen Festwert oder gleitend in Funktion des Innendrucks im Druckbehälter, weitgehend festlegt. Dieser Druckregler . kann zum Beispiel einen Druckübersetzungskolben umfassen, der einerseits mit dem Druck in der Druckkammer und andererseits mit dem Druck im Druckbehälter beaufschlagt ist, und ein Übersetzungsverhältnis kleiner als eins aufweist. In einer anderen Ausführung umfaßt . der Druckregler einen Druckkolben, der einerseits mit dem Druck in der Druckkammer und andererseits in einer separaten Steuerkammer mit dem reduzierten Druck im Druckbehälter beaufschlagt ist, wobei das Übersetzungsverhältnis gleich eins ist. Dieser Druckregler weist zum Beispiel vorteilhaft einen Druckminderer auf, der in eine Verbindungsleitung eingebaut ist, die das Innere des Druckbehälters mit der Steuerkammer verbindet.

Falls das zweite Druckmedium in der Druckkammer eine Flüssigkeit ist, so umfassen die Druckentlastungsmittel vorteilhaft eine Entlastungskammer im Ventilkörper, die nach außen weitgehend druckdicht abgedichtet ist. Hierdurch wird ein schneller Druckanstieg nach dem Platzen der ersten Berstscheibe gewährleistet, sowie nach dem Auslösen eine Leckage am Ventil vermieden. Die Druckentlastungsmittel können jedoch ebenfalls eine Entlastungsleitung umfassen, die aus dem Ventilkörper herausgeführt ist.

Das erfindungsgemäße Auslöseventil kann zum Beispiel in einer Feuerlöschvorrichtung als Auslöseventil auf einen Löschmittelbehälter montiert werden.

Weitere Merkmale und Vorteile ergeben sich aus der Beschreibung von mehreren Ausführungsbeispielen des erfindungsgemäßen Ventils, die anhand der beigefügten Zeichnungen vorgenommen wird.

Es zeigen:

Figur 1, einen schematischen Längsschnitt durch ein erstes Ausführungsbeispiel des erfindungsgemäßen Ventils;

Figur 2, einen schematischen Längsschnitt durch ein zweites Ausführungsbeispiel des erfindungsgemäßen Ventils.

Figur 3, einen schematischen Längsschnitt durch eine Ausführungsvariante des Ventils der Figur 2.

Das in den Figuren als Ausführungsbeispiel der Erfindung gezeigte Hochdruck-Auslöseventil 10, bzw. 110 oder 210, könnte zum Beispiel ein Auslöseventil einer stationären Kohlendioxid- oder Stickstoff-Feuerlöscheinrichtung sein. Es umfaßt einen Ventilkörper 12, mit einem unteren Anschlußflansch 14 zum Aufflanschen des Ventils 10, 110 oder 210 auf einen Gegenflansch 16 eines Druckbehälters 18. In diesem Druckbehälter 18 steht zum Beispiel ein gasförmiges Löschmedium unter Dauerdruck. Auf der gegenüberliegenden Seite des Anschlußflansches 14, weist das Ventil 10, 110 oder 210 einen zweiten Anschlußflansch 19 auf. An diesen zweiten Anschlußflansch 19 kann zum Beispiel eine (nicht gezeigte) offene Feuerlöschleitung angeschlossen werden, durch die das Löschmedium, nach Auslösen des Ventils 10, 110 oder 210 in einen von der Feuerlöscheinrichtung geschützten Raum einströmen kann.

Der Ventilkörper 12 wird von einem Durchgangskanal 20 axial durchquert. Dieser Durchgangskanal 20 weist eine Eintrittsöffnung 22 und eine Austrittsöffnung 24 auf. Die Eintrittsöffnung 22 wird von einer ersten Berstscheibe 26 und die Austrittsöffnung 24 von einer zweiten Berstscheibe 28 druckdicht verschlossen. Durch die beiden Berstscheiben 26, 28 wird im Durchgangskanal 20 eine Druckkammer 30 druckdicht abgegrenzt. Letztere ist mit einer Flüssigkeit aufgefüllt. Ein Druckentlastungskanal 32 mündet in die Druckkammer 30 ein und ist mit einer Durchstoßmembrane 34 druckdicht verschlossen. Der Pfeil 36 zeigt global eine an sich bekannte Auslösevorrichtung, die ein Durchstoßorgan 38 und eine Betätigungsvorrichtung 40 umfaßt. Letztere überträgt im Auslösefall die zum Durchstoßen der Durchstoßmembrane 34 notwendige Durchstoßkraft auf das Durchstoßorgan 38. Diese Durchstoßkraft kann in bekannter Weise zum Beispiel von Hand, pneumatisch, hydraulisch, elektrisch, thermisch oder pyrotechnisch erzeugt werden.

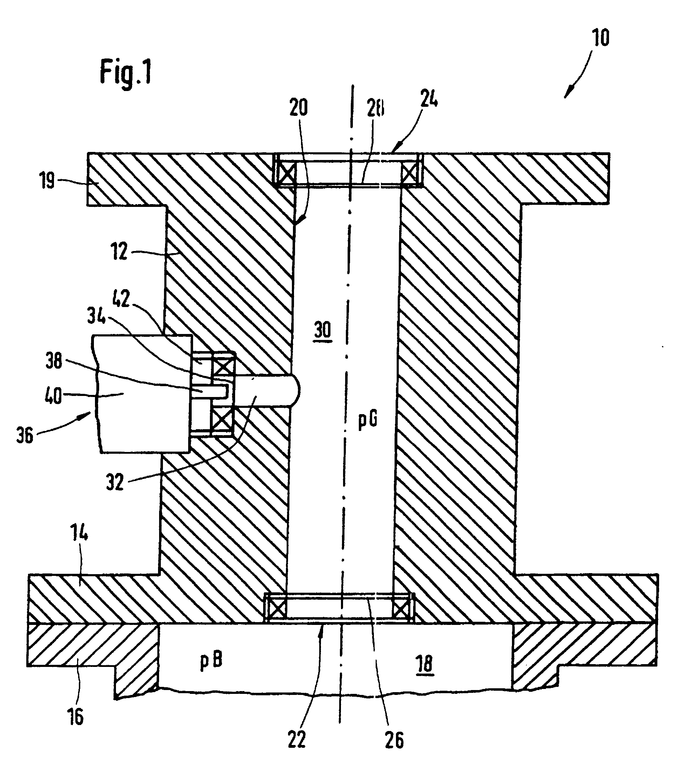

Das Ventil der Figur 1 funktioniert wie folgt. Die Flüssigkeit in der Druckkammer steht unter einem Gegendruck pG, der kleiner als der Druck im Druck im Druckbehälter 18 ist. Die erste Berstscheibe 26 muß folglich die Differenz zwischen dem Druck im Druckbehälter 18 und dem Druck in der Druckkammer 30 aushalten. Zum Auslösen des Ventils 10 wird die Durchstoßmembrane 34 von der Auslösevorrichtung 36 durchstoßen. Hierdurch kann Flüssigkeit aus der Druckkammer 30 in eine Entlastungskammer 42, die im Ventilkörper 12 hinter der Durchstoßmembrane 34 angeordnet ist, entweichen. Diese Entlastungskammer 42 ist vorteilhaft durch die Auslösevorrichtung 36 weitgehend druckdicht abgedichtet. Durch das Überströmen von Flüssigkeit aus der Druckkammer 30 in die Entlastungskammer 42, fällt der Gegendruck in der Druckkammer 30. Mit fallendem Gegendruck steigt der Differenzdruck dem die erste Berstscheibe 26 ausgesetzt ist. Erreicht dieser Differenzdruck den Berstdruck der ersten Berstscheibe 26, so platzt dieselbe. Das Druckmedium kann nun aus dem Druckbehälter 18 über die geplatzte Berstscheibe 26 in die Druckkammer 30 übertreten, so daß der Druck in der Druckkammer 30 wieder ansteigt. Da das Volumen der Entlastungskammer 42 vernachlässigbar im Vergleich zum Volumen des Druckbehälters 18 ist, würde der Druck in der Druckkammer 30 quasi sofort bis auf den Druck im Druckbehälter ansteigen. Erreicht der Druck in der Druckkammer 30 jedoch den Berstdruck der zweiten Berstscheibe 28 (der größer als der ursprüngliche Gegendruck pG in der Druckkammer 30, jedoch kleiner als der Druck im Druckbehälter gewählt ist), so platzt die zweite Berstscheibe 28 und der Inhalt des Druckbehälters 18 kann durch den nun offenen Durchgangskanal 20 des Ventils 10 strömen, wobei die Flüssigkeit aus der Druckkammer 30 mitgerissen wird. Die weitgehend druckdichte Entlastungskammer 42 könnte auch durch einen (nicht gezeigten) offenen Entlastungskanal nach außen ersetzt werden. In diesem Fall müßte dieser Entlastungskanal einen Druckwiderstand aufweisen der gewährleistet, daß nach dem Platzen der ersten Berstscheibe 26, der Druck in der Druckkammer 30 bis auf den Berstdruck der zweiten Berstscheibe 28 ansteigt.

In der weiteren Beschreibung werden folgende Bezeichnungen verwendet:

pG =    Gegendruck der Flüssigkeit in der Druckkammer 30;

pB =    Druck im Druckbehälter;
        (bei einem Gas im Druckbehälter 18 ist:

        pBmin =    Druck im Druckbehälter 18 bei der niedrigsten Umgebungstemperatur;

        pBmax =    Druck im Druckbehälter 18 bei der höchsten Umgebungstemperatur)

pND1    = Nennberstdruck der ersten Berstscheibe 26;

pND2    = Nennberstdruck der zweiten Berstscheibe 28;

dpND1    = Toleranz des Nennberstdrucks der ersten Berstscheibe 26;

dpND2    = Toleranz des Nennberstdrucks der zweiten Berstscheibe 28;

Im Ventil der Figur 1 müssen hierbei folgende Bedingungen, bei einem Gas im Druckbehälter 18 und einem Umgebungsdruck von 1 bar, erfüllt sein:

1) die erste Berstscheibe 26 darf nicht platzen falls der Druckbehälter 18 noch leer ist, das heißt:

$$pG - 1 < pND1 - dpND1$$

2) die zweite Berstscheibe 28 darf nicht unter dem Gegendruck pG in der Druckkammer platzen, das heißt:

$$pG - 1 < pND2 - dpND2$$

3) die erste Berstscheibe 26 darf nicht platzen falls der Druck im Druckbehälter gleich pBmax ist, das heißt:

$$pBmax - pG < pND1 - dpND1$$

4) die erste Berstscheibe 26 soll platzen, wenn nach dem Auslösen die Flüssigkeit aus der Druckkammer 30 strömt und hierdurch der Druck in der Druckkammer 30 abfällt, das heißt:

$$pBmin - \alpha(pG) > pND1 + dpND1$$

    wobei $0 < \alpha < 1$,
5) die zweite Berstscheibe 28 soll platzen, wenn der Druck in der Druckkammer 30 durch Überströmen des Druckmediums vom Druckbehälter 18 in die Druckkammer 30 wieder über den Wert des ursprünglichen Gegendrucks in der Druckkammer ansteigt, das heißt:

$$\beta(pBmin) > pND2 + dpND2$$

    wobei $0 < \beta < 1$,

Numerisches Beispiel:

a) Medium im Druckbehälter:

Stickstoff 200 bar bei 20°C;

pBmin = 173 bar (bei -20°C);

pBmax = 227 bar (bei +60°C);

b) Gegendruck in der Druckkammer des Ventils 10: pG = 110 bar;

c) Auslegung der Berstscheiben:

Nennberstdruck: pND2 = pND1 = 150 bar;

Toleranz auf dem Nennberstdruck: dpND2 = dpND1 = +/- 15 bar;

Man stellt fest, daß alle fünf vorgenannten Bedingungen erfüllt sind, und daß:

1) die erste Berstscheibe 26 spätestens platzt wenn der Druck in der Druckkammer 30 nach dem Auslösen von 110 bar bis auf 8 bar (d.h. auf 7,3% von pG) abgefallen ist;

2) die zweite Berstscheibe 28 spätestens platzt wenn der Druck in der Druckkammer 30 nach dem Platzen der ersten Berstscheibe 26 wieder bis auf 165 bar (d.h. auf 95% von pBmin) angestiegen ist.

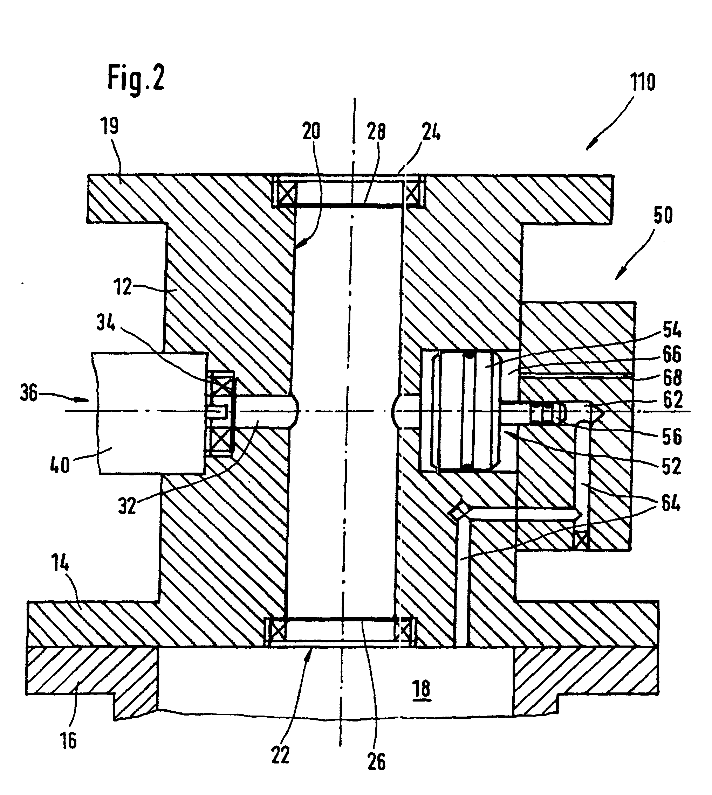

In der Figur 2 ist eine Ausführungsvariante des Ventils 10 der Figur 1 gezeigt. Die Teile des Ventils 110 die schon beschriebenen Teilen des Ventils 10 entsprechen, sind in der Figur 2 mit der gleichen Referenzzahl wie in der Figur 1 bezeichnet. Das Ventil 110 unterscheidet sich vom Ventil 10 durch eine Druckregeleinheit 50, die den Druck in der Druckkammer 30 linear in Funktion des Drucks im Druckbehälter 18 festlegt.

Die Druckregeleinheit 50 in Figur 2 ist als Übersetzungskolben 52 ausgebildet. Dieser Übersetzungskolben 52 umfaßt einen ersten Kolben 54 mit einem großen Kolbenquerschnitt und einen zweiten Kolben 56 mit einem kleineren Kolbenquerschnitt. Der große Kolben 54 dichtet eine Kolbenbohrung 58 im Ventilkörper 12 ab, die über eine Verbindungsbohrung 60 mit der Druckkammer 30 in Verbindung steht. Der kleine Kolben 56 dichtet eine Kolbenbohrung 62 im Ventilkörper 12 ab, die über Verbindungsbohrungen 64 mit dem Druckbehälter 18 in Verbindung steht. Der Zwischenraum 66 zwischen den beiden Kolben 54 und 56 ist über eine Bohrung 66 entlüftet.

Wenn:

A1 der abgedichtete Kolbenquerschnitt des ersten Kolbens 54,

A2 der abgedichtete Kolbenquerschnitt des zweiten Kolbens 56,

pG der Druck in der Druckkammer 30,

pB der Druck im Druckbehälter 18,

so ist : pG = pB(A2/A1).

In anderen Worten, beim Auffüllen des Druckbehälters 18 stellt sich in der Druckkammer 30 automatisch ein Druck ein der proportional zum Druck in dem Druckbehälter 18 ist. Diese Proportionalität zwischen den beiden Drücken bleibt bis zum Auslösen des Ventils 110 gewährleistet. Die Ventilausführung nach Figur 2 ist deshalb besonders interessant wenn der Innendruck im Druckbehälter sehr starken Schwankungen unterworfen ist, wie dies zum Beispiel bei Kohlendioxid der Fall ist.

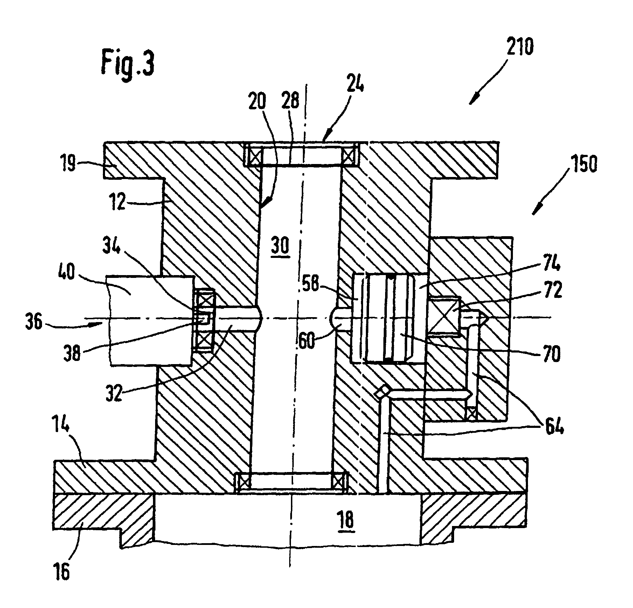

In der Figur 3 ist eine Ausführungsvariante des Ventils 110 der Figur 2 gezeigt. Die Druckregeleinheit 150 umfaßt, anstelle des Übersetzungskolbens 52, einen einzelnen Druckkolben 70 und einen an sich bekannten Druckminderer 72. Über den Druckminderer 72 und die Verbindungsbohrungen 64 wird eine Steuerdruckkammer 74 mit dem Druckmedium aus dem Druckbehälter 18 beaufschlagt. Der Druck in der Steuerdruckkammer 74 wird hierbei durch den Druckminderer 72 auf einen vorbestimmten Wert reduziert. Dieser reduzierte Druck wird über den Druckkolben 70 auf die Flüssigkeit in der Druckkammer 30 übertragen. Gegenüber der Druckregeleinheit 50 weist die Druckregeleinheit 150 den Vorteil auf, daß Leckagen weitaus besser zu vermeiden sind.

In den Figuren 1 bis 3 wurde das erfindungsgemäße Auslöseventil 10, 110, 210 jeweils als Flanschventil gezeichnet. Natürlich können die erfinderischen Merkmale auch in jede andere Ventilform integriert werden. Weiterhin können die erfinderischen Merkmale auch vorteilhaft in einen Funktionsblock integriert werden, der dann zum Beispiel in einen Ventilkörper eingesetzt wird.

**Patentansprüche**

1.  Auslöseventil für einen Druckbehälter (18) der mit einem ersten Druckmedium gefüllt ist, umfassend:

    einen Ventilkörper (12), der einen Durchgangskanal (20) mit einer Eintrittsöffnung (22) und einer Austrittsöffnung (24) für das erste Druckmedium aufweist;

    eine erste Berstscheibe (26) welche die Eintrittsöffnung (22) des Durchgangskanals (20) druckdicht verschließt;

eine zweite Berstscheibe (28) welche die Austrittsöffnung (24) des Durchgangskanals (20) druckdicht verschließt, wobei ein zweites Druckmedium zwischen den beiden Berstscheiben (26, 28) einen Gegendruck erzeugt der kleiner als der Druck im Druckbehälter ist;

Druckentlastungsmittel über die der Gegendruck zwischen den beiden Berstscheiben (26, 28) abbaubar ist, wobei die Berstscheiben (26, 28) derart ausgelegt sind, daß bei einem Abbau des Gegendrucks zwischen den beiden Berstscheiben (26, 28) die erste Berstscheibe (26) und zweite Berstscheibe (28) platzen und den Durchgangskanal (20) freigeben;

**dadurch gekennzeichnet, daß**
die Druckentlastungsmittel einen durch eine Durchstoßmembrane (34) druckdicht verschlossenen Druckentlastungskanal (32) aufweisen;
der Zwischenraum zwischen den beiden Berstscheiben (26, 28) eine druckdichte Druckkammer (30) ausbildet in den das zweite Druckmedium eingeschlossen ist; und
der Durchstoßmembrane (34) eine Durchstoßvorrichtung (38, 40) zugeordnet ist, die im Auslösefall die Durchstoßmembrane (34) durchstößt, so dass der Gegendruck in der Druckkammer (30) sich progressiv über die Druckentlastungsmittel abbaut, wobei die erste Berstscheibe (26) platzt, und bei anschließendem Druckanstieg in der Druckkammer (30), durch Überströmen des ersten Druckmediums in die Druckkammer (30), die zweite Berstscheibe (28) platzt.

2. Ventil nach Anspruch 1, **dadurch gekennzeichnet, daß** das zweite Druckmedium eine Flüssigkeit ist.

3. Ventil nach Anspruch 1 oder 2, wobei der Druck des ersten Druckmediums im Druckbehälter (18) zwischen einem maximalen und einem minimalen Wert schwankt, **dadurch gekennzeichnet, daß**:

a) der Gegendruck in der Druckkammer (30), der Berstdruck der ersten Berstscheibe (26) und der Berstdruck der zweiten Berstscheibe (28) derart gewählt sind, daß die Berstscheiben (26, 28) den Gegendruck in der Druckkammer (30), sowohl bei atmosphärischem Druck im Druckbehälter (18) als auch bei maximalem Innendruck im Druckbehälter (18) aushalten;

b) der Berstdruck der ersten Berstscheibe (26) derart gewählt ist, daß sie platzt sobald die Druckdifferenz zwischen minimalem Innendruck im Druckbehälter (18) und Gegendruck in der Druckkammer (30), durch den progressiven Abbau des Gegendrucks einen bestimmten Wert überschreitet,

c) die Druckentlastungsmittel (32, 34) derart ausgelegt sind, daß nach dem Platzen der ersten Berstscheibe (26), der Druck in der Druckkammer (30) durch Überströmen des ersten Druckmediums in die Druckkammer (30) wieder über den Wert des ursprünglichen Gegendrucks in der Druckkammer (30) ansteigt, und

d) der Berstdruck der zweiten Berstscheibe (28) derart gewählt ist, daß sie platzt sobald der Druck in der Druckkammer (30) nach dem Platzen der ersten Berstscheibe (26) einen bestimmten Grenzwert, der größer als der maximale Gegendruck in der Druckkammer (30) vor dem Auslösen der Auslösevorrichtung (36), jedoch kleiner als der minimale Druck im Druckbehälter (18) ist, überschreitet.

4. Ventil nach einem der Ansprüche 1 bis 3, **gekennzeichnet durch** einen Druckregler (50, 150) der den Druck in der Druckkammer (30) gleitend in Funktion des Innendrucks im Druckbehälter (18) regelt.

5. Ventil nach Anspruch 4, **dadurch gekennzeichnet, daß** der Druckregler (50) einen Druckübersetzungskolben(52) umfaßt, der einerseits mit dem Druck in der Druckkammer (30) und andererseits mit dem Druck im Druckbehälter (18) beaufschlagt ist, wobei das Übersetzungsverhältnis kleiner als eins ist.

6. Ventil nach einem der Ansprüche 1 bis 3, **dadurch gekennzeichnet, daß** der Druck in der Druckkammer (30) durch einen Druckregler (150) auf einen Festwert festlegt wird.

7. Ventil nach Anspruch 6, **dadurch gekennzeichnet, daß** der Druckregler (150) einen Druckkolben (70) umfaßt, der einerseits mit dem Druck in der Druckkammer (30) und andererseits in einer Steuerkammer (74) mit dem reduzierten Druck im Druckbehälter beaufschlagt ist, wobei das Übersetzungsverhältnis gleich eins ist.

8. Ventil nach Anspruch 7, **dadurch gekennzeichnet, daß** der Druckregler (150) weiterhin einen Druckminderer (72) aufweist, der in eine Verbindungsleitung (64) zwischen der Steuerkammer (74) und dem Inneren des Druckbehälters (18) eingebaut ist.

9. Ventil nach einem der Ansprüche 1 bis 8, **dadurch gekennzeichnet, daß** die Druckentlastungsmittel eine Entlastungskammer (42) umfassen, welche nach außen weitgehend druckdicht abgedichtet ist.

10. Ventil nach einem der Ansprüche 1 bis 8, **dadurch gekennzeichnet, daß** die Druckentlastungsmittel eine Entlastungsleitung umfassen, welche aus dem Ventilkörper (12) herausgeführt ist.

11. Feuerlöschvorrichtung umfassend einen Löschmittelbehälter (18) und ein Ventil nach einem der Ansprüche 1 bis 10, wobei dieses Ventil als Auslöseventil auf den Löschmittelbehälter (18) montiert ist.


**Claims**

1. Trigger valve for a pressure tank (18) filled with a first pressure medium, comprising:

    a valve body (12) comprising a passageway (20) having an inlet port (22) and an outlet port (24) for the first pressure medium;

    a first rupture disk (26) pressure sealing the inlet port (22) of the passageway (20);

    a second rupture disk (28) pressure sealing the outlet port (24) of the passageway (20), a second pressure medium generating a counter pressure between the two rupture disks (26, 28) which is smaller than the pressure in the pressure tank;

    pressure discharge means via which the counter pressure between the two rupture disks (26, 28) can be reduced, the rupture disks (26, 28) being designed such that in case of a reduction of the counter pressure between the two rupture disks (26, 28) the first rupture disk (26) and the second rupture disk (28) burst and release the passageway (20);

    **characterized in that**
    the pressure discharge means comprise a pressure discharge duct (32) pressure sealed by a push through diaphragm (34);
    the space between the two rupture disks (26, 28) forms a pressure sealed pressure chamber (30) where the second pressure medium is enclosed; and
    a push through means (38, 40) is assigned to the push through diaphragm (34), which, in the event of a triggering, pushs through the push through diaphragm (34), such that the counter pressure in the pressure chamber (30) is progressively reduced via the pressure discharge means, wherein the first rupture disk (26) bursts, and with a subsequent pressure increase in the pressure chamber (30), by an overflow of the first pressure medium into the pressure chamber (30), the second rupture disk (28) bursts.

2. Valve according to claim 1, **characterized in that** the second pressure medium is a liquid.

3. Valve according to claim 1 or 2, wherein the pressure of the first pressure medium in the pressure tank (18) fluctuates between a maximum and a minimum value, **characterized in that**

    a) the counter pressure in the pressure chamber (30), the bursting pressure of the first rupture disk (26) and the bursting pressure of the second rupture disk (28) are selected such that the rupture disks (26, 28) withstand the counter pressure in the pressure chamber (30) with an atmospheric pressure in the pressure tank (18) as well as with the maximum internal pressure in the pressure tank (18);

    b) the bursting pressure of the first rupture disk (26) is selected such that it bursts as soon as the pressure difference between the minimum internal pressure in the pressure tank (18) and the counter pressure in the pressure chamber (30) exceeds a certain value due to the progressive reduction of the counter pressure,

    c) the pressure discharge means (32, 34) are designed such that, after the bursting of the first rupture disk (26), the pressure in the pressure chamber (30) again exceeds the value of the original counter pressure in the pressure chamber (30) due to an overflow of the first pressure medium into the pressure chamber (30), and

    d) the bursting pressure of the second rupture disk (28) is selected such that it bursts as soon as the pressure in the pressure chamber (30) after the bursting of the first rupture disk (26) exceeds a certain limiting value which is larger than the maximum counter pressure in the pressure chamber (30) before the triggering of the trigger device (36), which is, however, smaller than the minimum pressure in the pressure tank (18).

4. Valve according to one of claims 1 to 3, **characterized by** a pressure balance regulator (50, 150) which continuously controls the pressure in the pressure chamber (30) in function of the internal pressure in the pressure tank (18).

5. Valve according to claim 4, **characterized in that** the pressure balance regulator (50) comprises a pressure transmission piston (52) on which, on the one hand, the pressure in the pressure chamber (30) and on the other hand the pressure in the pressure tank (18) acts, the transmission ratio being smaller than one.

6. Valve according to one of claims 1 to 3 **characterized in that** the pressure in the pressure chamber (30) is set by a pressure balance regulator (150) to a fixed value.

7. Valve according to claim 6, **characterized in that** the pressure balance regulator (150) comprises a pressure piston (70) on which, on the one hand, the pressure in the pressure chamber (30) and, on the other hand, in a control chamber (74) the reduced pressure in the pressure tank acts, wherein the transmission ratio is equal to one.

8. Valve according to claim 7, **characterized in that** the pressure balance regulator (150) further comprises a pressure reducer (72) mounted in a connection duct (64) between the control chamber (74) and the interior of the pressure tank (18).

9. Valve according to one of claims 1 to 8, **characterized in that** the pressure discharge means comprise a discharge chamber (42) which is pressure sealed towards the outside.

10. Valve according to one of claims 1 to 8, **characterized in that** the pressure discharge means comprise a discharge duct which is led out of the valve body (12).

11. Fire extinguishing device comprising an extinguishing substance container (18) and a valve according to one of claims 1 to 10, this valve being mounted on the extinguishing substance container (18) as a trigger valve.

**Revendications**

1. Soupape de déclenchement pour un réservoir sous pression (18) rempli avec un premier fluide de pression, comprenant :

   un corps de soupape (12) qui présente un canal de passage (20) ayant un orifice d'entrée (22) et un orifice de sortie (24) pour le premier fluide de pression ;

   un premier disque de rupture (26) qui ferme l'orifice d'entrée (22) du canal de passage (20) de manière étanche sous pression ;

   un deuxième disque de rupture (28) qui ferme l'orifice de sortie (24) du canal de passage (20) de manière étanche sous pression, un deuxième fluide de pression produisant une contre-pression entre les deux disques de rupture (26, 28), qui est inférieure à la pression dans le réservoir sous pression ;

des moyens de décharge de la pression, par l'intermédiaire desquels la contre-pression entre les deux disques de rupture (26, 28) peut être déchargée, les disques de rupture (26, 28) étant conçus de telle manière qu'en cas d'une décharge de la contre-pression entre les deux disques de rupture (26, 28), le premier disque de rupture (26) et le deuxième disque de rupture (28) éclatent et libèrent le canal de passage (20) ;

**caractérisée en ce que**
les moyens de décharge de la pression présentent un canal de décharge de la pression (32) fermé de manière étanche sous pression par une membrane de perforation (34) ;
l'espace intermédiaire entre les deux disques de rupture (26, 28) forme une chambre étanche sous pression (30), dans lequel espace est enfermé le deuxième fluide de pression ; et
**en ce qu'**un dispositif de perforation (38, 40) est attribué à la membrane de perforation (34), ce dispositif perforant la membrane de perforation (34) en cas de déclenchement, de telle sorte que la contre-pression dans la chambre de pression (30) se décharge progressivement par l'intermédiaire des moyens de décharge de la pression, le premier disque de rupture (26) éclatant, et le deuxième disque de rupture (28) éclatant, lors de la montée en pression ultérieure dans la chambre de pression (30), par le passage du premier fluide de pression dans la chambre de pression (30).

2. Soupape selon la revendication 1, **caractérisée en ce que** le deuxième fluide de pression est un liquide.

3. Soupape selon la revendication 1 ou 2, la pression du premier fluide de pression dans le réservoir sous pression (18) variant entre une valeur maximale et une valeur minimale, **caractérisée en ce que** :

   a) la contre-pression dans la chambre de pression (30), la pression de rupture du premier disque de rupture (26) et la pression de rupture du deuxième disque de rupture (28) sont sélectionnées de telle manière que les disques de rupture (26, 28) résistent à la contre-pression dans la chambre de pression (30) aussi bien en cas de pression atmosphérique dans le réservoir sous pression (18) qu'en cas de pression interne maximale dans le réservoir sous pres-

sion (18) ;

b) la pression de rupture du premier disque de rupture (26) est sélectionnée de telle manière qu'il éclate dès que la différence de pression entre la pression interne minimale dans le réservoir sous pression (18) et la contre-pression dans la chambre de pression (30) dépasse une certaine valeur en raison de la réduction progressive de la contre-pression,

c) les moyens de décharge de la pression (32, 34) sont conçus de telle manière qu'après l'éclatement du premier disque de rupture (26), la pression dans la chambre de pression (30) augmente à nouveau au-delà de la valeur de la contre-pression initiale dans la chambre de pression (30) par le passage du premier fluide de pression dans la chambre de pression (30), et

d) **en ce que** la pression de rupture du deuxième disque de rupture (28) est sélectionnée de telle manière qu'il éclate dès que la pression dans la chambre de pression (30) dépasse, après l'éclatement du premier disque de rupture (26), une certaine valeur limite qui est supérieure à la contre-pression maximale dans la chambre de pression (30) avant le déclenchement du dispositif de déclenchement (36), mais cependant inférieure à la pression minimale dans le réservoir sous pression (18).

**4.** Soupape selon l'une quelconque des revendications 1 à 3, **caractérisée par** un régulateur de pression (50, 150) qui règle la pression dans la chambre de pression (30) en fonction de la pression interne dans le réservoir sous pression (18).

**5.** Soupape selon la revendication 4, **caractérisée en ce que** le régulateur de pression (50) comprend un piston de rapport de compression (52) qui est exposé d'une part à la pression dans la chambre de pression (30) et d'autre part à la pression dans le réservoir sous pression (18), le rapport de compression étant inférieur à un.

**6.** Soupape selon l'une quelconque des revendications 1 à 3, **caractérisée en ce que** la pression dans la chambre de pression (30) est fixée sur une valeur fixe par un régulateur de pression (150).

**7.** Soupape selon la revendication 6, **caractérisée en ce que** le régulateur de pression (150) comprend un piston de pression (70) qui est exposé d'une part à la pression dans la chambre de pression (30) et d'autre part, dans une chambre de commande (74), à la pression réduite dans le réservoir sous pression, le rapport de compression étant égal à un.

**8.** Soupape selon la revendication 7, **caractérisée en ce que** le régulateur de pression (150) présente en outre un réducteur de pression (72) qui est installé dans une conduite de liaison (64) entre la chambre de commande (74) et l'intérieur du réservoir sous pression (18).

**9.** Soupape selon l'une quelconque des revendications 1 à 8, **caractérisée en ce que** les moyens de décharge de la pression comprennent une chambre de décharge (42) qui est largement étanche sous pression.

**10.** Soupape selon l'une quelconque des revendications 1 à 8, **caractérisée en ce que** les moyens de décharge de la pression comprennent une conduite de décharge qui est menée hors du corps de soupape (12).

**11.** Dispositif d'extinction comprenant un réservoir de fluide extincteur (18) et une soupape selon l'une quelconque des revendications 1 à 10, cette soupape étant installée sur le réservoir de fluide extincteur (18) comme soupape de déclenchement.

Fig.1

Fig.2

Fig.3